# EUROPÄISCHE PATENTSCHRIFT

(11) **EP 3 081 331 B1**
(45) Veröffentlichungstag und Bekanntmachung des Hinweises auf die Patenterteilung: **11.09.2019**
(21) Anmeldenummer: 15163497.9
(22) Anmeldetag: 14.04.2015
(51) Int. Cl.: B23Q 11/08, A61C 13/00

(54) **DENTALFRÄSMASCHINE**
DENTAL MILLING MACHINE
FRAISEUSE DENTAIRE

(43) Veröffentlichungstag der Anmeldung: 19.10.2016
(73) Patentinhaber: Ivoclar Vivadent AG, 9494 Schaan (LI)
(72) Erfinder: Rohner, Gottfried, CH-9450 Altstätten (CH); Lorünser, Johannes, 6700 Bludenz (AT); Pokorny, Walter, 6719 Bludesch (AT)
(74) Vertreter: Baronetzky, Klaus

(56) Entgegenhaltungen:
- WO-A1-2008/023043
- DE-A1- 2 944 397
- DE-A1- 4 309 719
- DE-A1-102004 008 101
- DE-U1-202004 002 588
- JP-A- S63 200 905

## Beschreibung

Die Erfindung betrifft eine Dentalfräsmaschine.

Dentalfräsmaschinen sind typischerweise als Vierachs- oder Fünfachs-Fräsmaschinen ausgebildet und erlauben die Herstellung von Dentalrestaurationen per CNC-Ansteuerung.

Mit derartigen Fräsmaschinen ist es grundsätzlich möglich, eine exakte individuelle Anpassung des Dentalrestaurationsproduktes zu realisieren, entsprechende Fräsdaten vorausgesetzt. Preisgünstige Dentalfräsmaschinen bewegen sich um etwa 25.000,- €, während höherwertige Fräsmaschinen auch beispielsweise 50.000,-€ kosten können. Mit den höheren Kosten lässt sich zum einen eine bessere Fräsqualität (bessere Oberflächentreue) realisieren, aber gegebenenfalls auch ein rascherer Prozesszyklus.

Moderne Zahnlabors verfügen typischerweise über ganze Reihen von Dentalfräsmaschinen, so dass hohe Kosten signifikant zu Buche schlagen. Um die Fräsmaschinen effizienter ausnutzen zu können, ist es bekannt geworden, mit der gleichen Fräsmaschine - nach Werkzeugwechsel - unterschiedliche Dentalmaterialien wie Kunststoff und Keramik zu fräsen. Die Anforderungen an die Fräsleistung sind hierbei sehr unterschiedlich, wenn man bedenkt, dass zu Kunststoffen auch wachsartige Massen gehören, die als Modellmasse verwendet werden und vergossen werden, und zum anderen aber auch vorgesinterte Keramiken, die bereits eine erhebliche Härte aufweisen.

Versuche haben ergeben, dass die Fräsqualität, aber auch die Prozesszeit im Verhältnis zu der Oberflächengüte, stark von Randparametern abhängt. Der Fräsfortschritt darf nicht so groß gewählt werden, dass eine Überhitzung des zu fräsenden Materials erfolgt. Ferner muss der anfallende Frässtaub bzw. müssen die anfallenden Frässpäne sicher entfernt werden, wozu es bekannt geworden ist, über spezielle Abblas-/Absauganlagen den Arbeitsbereich - und auch die Fräsbank -, in welcher die für die automatische Bestückung vorgesehenen Fräser bereitgehalten werden, sicher zu säubern.

Bei bestimmten Materialien, nämlich bevorzugt bei Metallen und Keramiken, ist es günstig, zusätzlich zur Absaugung und Abblasung dem Arbeitsbereich Kühlschmierstoffe zuzuführen. Dies bedingt speziell ausgelegte und dementsprechend teure Nassfräsmaschinen, deren Werkraum abgedichtet ist. Zwar hat das Nassfräsen - gerade auch hinsichtlich der Begrenzung der Temperatur - bei vielen Werkstoffen Vorteile. Die Tendenz geht jedoch zum Trockenfräsen, nachdem - abgesehen von dem höheren baulichen Aufwand - allein für die Kühlflüssigkeit Zusatzkosten von 20% zu veranschlagen sind.

Aufgrund der verbesserten Kühlung lassen sich bestimmte Materialien jedoch mit Kühlflüssigkeit mit einem erheblich besseren Fräsfortschritt fräsen, und nach dem Verhältnis der trocken zu fräsenden Dentalwerkstoffe und der nass zu fräsenden Dentalwerkstoffe entscheiden sich die Kunden dann für die entsprechende Fräsmaschine, wobei lediglich in großen Dentallabors mehrere Arten von Fräsmaschinen zum Einsatz gelangen.

Aus der WO 2008/023043 A1 ist eine Bearbeitungsmaschine insbesondere für die Herstellung von Zahnersatzteilen oder Modellen davon bekannt. Die dortige Bearbeitungsmaschine weist einen Werkstückhalter und mindestens ein Bearbeitungswerkzeug auf, welche in einem Bearbeitungsraum für ein darin angebrachtes Werkstück angeordnet sind. Eine dortige Vorschubachse für das Werkstück in den Bearbeitungsraum hinein ist gegenüber der Horizontalen schräg gestellt.

DE 10 2004 008 101 A1 offenbart eine Fräsmaschine mit einer Werkzeugspindel mit einem wechselbaren Werkzeug in Form eines Fräsers, das in mindestens einer Raumachse verstellbar ist, wobei die Verstellbarkeit eine translatorische und/oder rotatorische Verstellbarkeit umfasst, und mit einer in einer weiteren Raumachse verstellbaren Werkstück-Haltevorrichtung, und wobei die Fräsmaschine von Normalbetrieb auf Kapselbetrieb umrüstbar ausgestaltet ist. Bei der Umrüstung ist eine aus Segmenten gebildetete Kapsel mit einer im Wesentlichen einen allseitig geschlossenen Hohlraum bildenden staubdichte Manschette ausgerüstet, die nach der Art eines Gummibalgs einen Arbeitsbereich der Fräsmaschine staubdicht umgibt, wobei die Manschette zwei Anschlüsse aufweist und wobei mindestens ein Segment der Manschette verformbar ist und wobei die Anschlüsse relativ zueinander bewegbar sind, ohne dass der Hohlraum undicht würde.

Demgegenüber liegt der Erfindung die Aufgabe zugrunde, eine Dentalfräsmaschine gemäß dem Oberbegriff von Anspruch 1 zu schaffen, die bei Verwendung einer trocken konzipierten Dentalfräsmaschine dennoch bei Bedarf einen höheren Fräsfortschritt ermöglichen.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass die Dentalfräsmaschine preisgünstig als Trockenfräsmaschine konzipiert sein kann. Dies ermöglicht nicht nur den Verzicht auf feuchtigkeitsdichte Abdichtungen im Fräs-Arbeitsraum, sondern beispielsweise auch Vereinfachungen bei der VDE-Zulassung.

Erfindungsgemäß ist es vorgesehen, bei einer derartigen Trocken-Dentalfräsmaschine kurzerhand eine komplett feuchtigkeitsdicht verschließbare Manschette einzusetzen, die nach der Art eines Gummibalgs den Arbeitsbereich feuchtigkeitsdicht umgibt. Erfindungsgemäß ist es besonders günstig, wenn die Manschette dicht ist, insbesondere also feuchtigkeitsdicht, aber zugleich auch staubdicht. Eine trocken konzipierte Dentalfräsmaschine lässt sich erfindungsgemäß so ohne Weiteres umrüsten.

Es ist möglich, für die Reinigung des Arbeitsbereichs Wasser zu verwenden, aber auch einen beliebigen anderen Kühlschmierstoff. Es können auch beliebige andere Flüssigkeiten zur Reinigung - und fakultativ auch zur Kühlung - herangezogen werden.

Zusätzlich oder alternativ kann auch der Werkraum im Übrigen mit einer elektrostatischen Absaugung versehen sein.

Eine weitere Möglichkeit, um die Reinigungswirkung zu verbessern, liegt darin, die Manschette innen und/oder außen antistatisch zu beschichten.

Die Manschette ist in sich beweglich und mit Durchführungen für den Fräsantrieb bzw. den Tischantrieb versehen. Dennoch ist sie in sich dicht.

Hierzu ist diese elastische Manschette sowohl am Hals des Fräsantriebs, also der Werkzeugspindel, als auch an einem entsprechendem Kragen des Werkstückantriebs oder Tischantriebs also der Werkstückhaltevorrichtung flüssigkeitsdicht befestigt. Die Abdichtung kann in an sich bekannter Weise über Kniehebel mit Übertotpunkstellung erfolgen, auch bei der Beschleunigung, die sowohl der Fräsmaschinenantrieb als auch der Werkstückantrieb während des Betriebs erfahren.

Die Manschette ist mit einem voluminösen Manschettenbauch ausgebildet, so dass sie die größten bei der Bearbeitung anfallenden Relativbewegungen zwischen diesen beiden Anschlussflanschen ohne Weiteres abfängt, insbesondere ohne ihre Dichtheit zu riskieren.

Für die Abnahme der Manschette kann es vorgesehen sein, die beiden Kniehebel zu lösen, wobei sich der Manschettenflansch dann ohne Weiteres vom Fräsantrieb lösen lässt. Bevorzugt ist am Tischantrieb eine trennbare Naht vorgesehen, um ein Aufstülpen bzw. Entfernen für den Werkstücktisch zu ermöglichen. Diese Naht kann ebenfalls in beliebiger geeigneter Weise abgedichtet sein, beispielsweise durch einen Magnetverschluss.

Zwar ist es an sich bei Werkzeugmaschinen seit langem bekannt, über verschiedene Schürzen, die meist aus festem Kunststoff oder gegebenenfalls aus Blech bestehen, einen gewissen Spritzschutz zu realisieren. Dies hat jedoch nichts mit einer feuchtigkeitsdichten Kapselung zu tun und ermöglicht es nicht, auf die Abdichtung des Fräsraums bei Nassbetrieb zu verzichten.

In einer vorteilhaften Ausgestaltung ist es vorgesehen, dass die Manschette sowohl das Werkzeug als auch das Werkstück umgibt und bei der Bewegung entlang bzw. um die vorstehend genannten Achsen mitgeführt wird.

In einer weiteren vorteilhaften Ausgestaltung ist es vorgesehen, dass die Dentalfräsmaschine einen Innenraum aufweist, in welchem sich die Werkzeugspindel und die Werkstück-Haltevorrichtung erstreckt, gegebenenfalls zusammen mit der Manschette, und dass der Arbeitsraum insbesondere mit einer Tür verschließbar ist.

In einer weiteren vorteilhaften Ausgestaltung ist es vorgesehen, dass die Werkzeugspindel um zwei bis vier Achsen und die Werkstück-Haltevorrichtung ebenfalls um zwei bis vier Achsen verlagerbar ist, wobei die Summe der Achsen insbesondere fünf oder sechs beträgt.

In einer weiteren vorteilhaften Ausgestaltung ist es vorgesehen, dass eine Trocken-Dentalfräsmaschine mit einer erfindungsgemäßen Manschette nachgerüstet ist.

In vorteilhafter Ausgestaltung der Erfindung ist vorgesehen, die balgartige Manschette bei Bedarf mit einem Feuchtigkeitssperrventil zu versehen, das jedoch gasdurchlässig ist. Hiermit ist ein gegebenenfalls erwünschter Volumenausgleich bei größeren Bewegungen der Manschette realisierbar, ohne dass die Abdichtung gefährdet wäre.

Erfindungsgemäß besonders günstig ist es, wenn die Manschette im Wesentlichen in Kugelform vorgeformt ist. Dies ermöglicht vergleichsweise große Relativbewegungen zwischen Tischantrieb und Maschinenantrieb während der Fräsbearbeitung, aber dennoch eine sichere Abdichtung gegenüber dem Arbeitsraum der Fräsmaschine.

Für die Nassbearbeitung, also für das Nassfräsen, wird bevorzugt in an sich bekannter Weise die geeignete Flüssigkeit, beispielsweise über eine Spritzdüse, die an der Manschette angebracht ist, dem Bearbeitungsbereich zugeführt. Die Entsorgung der Flüssigkeit erfolgt dann über eine Ablaufleitung, die im unteren Bereich der Manschette angebracht ist.

In an sich bekannter Weise kann auch eine Regeneration des Kühlschmierstoffs erfolgen, durch Abscheidung und Reinigung sowie Kühlung der die Ablaufleitung verlassenden Flüssigkeit.

Während hier grundsätzlich von Dentalfräsmaschinen die Rede ist, versteht es sich, dass die gleiche Technik auch bei entsprechenden Dentalschleifmaschinen eingesetzt werden kann.

Ferner ist es günstig, dass die Dentalfräsmaschine als Trocken-Fräsmaschine auch mit einer erfindungsgemäßen Manschette nachrüstbar ist. Sowohl der Tischantrieb als auch der Spindelantrieb weisen typischerweise einen Flansch auf, der für den Anschluss des je zugehörigen Manschettenflansches grundsätzlich geeignet ist. Dies kann beispielsweise in an sich bekannter Weise über eine Spannschelle, oder eine Spannschelle mit Kniehebel, erfolgen.

Die erfindungsgemäße Manschette ist bevorzugt sowohl mit einer Zuleitung für Kühlschmierstoff versehen, als auch mit einer Ableitung, die den von Spänen und Fräsmehl verunreinigten Kühlschmierstoff abführen kann. Bevorzugt ist die Zuleitung mit einer Düse versehen, die gezielt den Arbeitsbereich, also die Stelle, an der der Fräser an dem Werkstück arbeitet, mit Kühlschmierstoff beaufschlagt.

Die Ableitung des insofern verunreinigten Kühlschmierstoffs erfolgt im unteren Bereich der Manschette, die durch ihre Kugelform im Grunde auch eine Trichterwirkung für diesen Kühlschmierstoff hat. Bei Absaugung dieses Kühlschmierstoffs ist es wesentlich, den dort bestehenden Unterdruck so zu dimensionieren, dass ein Kollabieren der Manschette sicher verhindert wird.

In vorteilhafter Ausgestaltung kann die Manschette auch unter einem leichten Überdruck von beispielsweise 50 mbar stehen, so dass der Manschettenbauch stets gut kugelförmig ausgewölbt ist.

Bevorzugt hält die Dichtwirkung der Manschettennaht ohne Weiteres diesem geringen Überdruck stand.

In einer ersten Ausführungsform ist die Manschette sowohl beim Werkzeugwechsel als auch bei dem Wechsel des Werkstücks manuell aufzutrennen. Durch den Magnetverschluss der Manschettennaht lässt sich das recht leicht bewerkstelligen.

In einer weiteren Ausführungsform der erfindungsgemäßen Manschette ist diese etwas formstabiler. Bei Annäherung einer Nahthälfte an die andere Nahthälfte in einem bestimmten Winkel schnappen die Nähte aneinander ein, und bei entsprechendem Zug in Gegenrichtung trennen sich die beiden Formhälten der Manschettennaht voneinander. Bei dieser Lösung ist es günstig, wenn sowohl im Bereich des Spindel-Manschettenflansches als auch im Bereich des Tisch-Manschettenflansches je ein Faltenbalg vorgesehen ist, der die Relativbewegung dieser beiden zueinander bei abgedichteter Manschette erleichtert.

In einer weiteren Ausführungsform der erfindungsgemäßen Manschette sind die Permanentmagnete an der Naht der Manschette durch Elektromagnete ersetzt, die mit ferromagnetischen Elementen an der anderen Formhälfte zusammenwirken.

Für das Trennen der Manschette - beispielsweise beim Werkzeugwechsel - wird kurzerhand der Elektromagnet oder werden kurzerhand die Elektromagneten abgeschaltet, so dass sich die Manschettenhälften leicht voneinander trennen lassen, und nach dem erfolgten Werkstückwechsel - oder aber nach Neubestückung des Werkstücktischs und erwünschtem Nassbetrieb des folgenden Bearbeitungsvorgangs - wird der Elektromagnet oder werden die Elektromagneten nach Annäherung der beiden Manschettenhälften aneinander erneut eingeschaltet.

In bevorzugter Ausgestaltung ist es vorgesehen, dass die Manschette aus zwei Manschettenhälften oder -halbschalen besteht, die von der Manschettennaht getrennt sind. Eine der Halbschalen ist mit dem Manschettenflansch für die Werkzeugspindel und die andere Manschetten-Halbschale mit dem Manschettenflansch für den Tischantrieb versehen. Während bevorzugt der Manschettenbauch im Wesentlichen kugelförmig ausgebildet ist, versteht es sich, dass bei Bedarf ohne Weiteres auch beliebige andere Formen realisierbar sind, beispielsweise eine Würfelform oder eine Oktaederform, gegebenenfalls je mit abgerundeten Kanten.

In einer bevorzugten Ausgestaltung ist es vorgesehen, die Fräserbank innerhalb der Manschette vorzusehen. Bei dieser Lösung ist es dann nicht erforderlich, für den Fräserwechsel eine Öffnung der Manschette vorzunehmen.

Die Realisierung der erfindungsgemäßen Manschette schließt nicht aus, dass auch bei Trockenbetrieb, also ohne Manschette, die Dentalfräsmaschine mit Maßnahmen zur Spanabfuhr versehen ist. So kann beispielsweise eine Luftdüse auch im Trockenbetrieb vorgesehen sein, die auf den Arbeitsbereich weist. Dieser kann in an sich bekannter Weise mit einem Ionisator versehen sein, um Haftung beispielsweise von Kunststoffspänen an dem Werkstück bzw. dem Fräser zu verhindern. Es ist insofern auch möglich, die Manschette innen und/oder außen antistatisch zu beschichten.

Weitere Einzelheiten, Vorteile und Merkmale ergeben sich aus der nachfolgenden Beschreibung mehrerer Ausführungsbeispiele anhand der Zeichnungen.

Es zeigen:
- Fig. 1: eine schematische Ansicht eines Teils einer erfindungsgemäßen Dentalfräsmaschine, unter Darstellung unter anderem der Manschette;
- Fig. 2: eine schematische Darstellung der Ausführungsform gemäß Fig. 1, jedoch in Schnittdarstellung;
- Fig. 3: eine Darstellung einer weiteren Ausführungsform einer erfindungsgemäßen Dentalfräsmaschine; und
- Fig. 4: eine Darstellung einer weiteren Ausführungsform einer erfindungsgemäßen Dentalfräsmaschine.

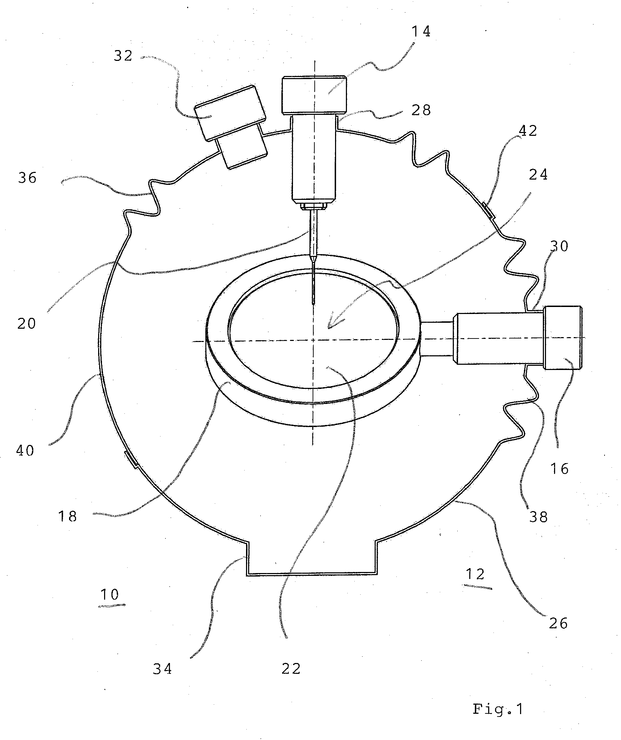

In der Ausführungsform gemäß Fig. 1 ist eine Dentalfräsmaschine 10 in an sich bekannter Weise mit einem Fräsarbeitsraum 12 versehen, der in an sich bekannter Weise ausgebildet ist, wie es bei einer Trocken-Dentalfräsmaschine vorgesehen ist, also ohne flüssigkeitsdichte Abdichtungen.

Die Dentalfräsmaschine weist eine Antriebsspindel 14 und einen Tischantrieb 16 mit einem Werkstückhalter 18 auf. Ein Fräser 20 ist an der Arbeitsspindel 14 angebracht und bearbeitet das Werkstück 22 an einem Bearbeitungsbereich 24.

Erfindungsgemäß ist eine Manschette 26 vorgesehen, die den Bearbeitungsbereich 24 im Wesentlichen kugelförmig umgibt. Die Manschette weist Ausnehmungen auf, die den Durchtritt der Arbeitsspindel 14 und des Tischantriebs 16 ermöglichen. Dort ist je ein Manschettenflansch 28 bzw. 30 vorgesehen, der gegenüber der Arbeitsspindel 14 bzw. dem Tischantrieb 16 dicht abdichtet.

Der Arbeitsspindel 14 benachbart ist eine Düse 32 vorgesehen, über welche Kühlschmierstoffe oder Ähnliches dem Bearbeitungsbereich 24 zuführbar sind.

Am unteren Ende der Manschette 26 ist eine Ableitung 34 angebracht, die Späne und verbrauchte Kühlschmierstoffe aufnimmt und für die Abfuhr dieser geeignet ist.

Die Düse 32 ist zusammen mit der Antriebsspindel 14 gelagert. Sie ist von einem Faltenbalg 36 der Manschette umgeben, der eine Relativbewegung erlaubt.

Ebenso ist der Manschettenflansch 30 für den Tischantrieb 16 von einem Faltenbalg 38 umgeben, der ebenfalls eine leichte Relativbewegung zwischen dem Manschettenbauch 40 und dem Tischantrieb 16 ermöglicht.

Im Betrieb bewegen sich die Arbeitsspindel 14 und der Tischantrieb 16 relativ zueinander in unterschiedlicher Weise, entsprechend dem Fräsfortschritt, durch Verformung der Manschette 26, insbesondere im Bereich des Faltenbalgs, aber auch im Übrigen. Die Manschette 26 besteht aus einem beliebigen geeigneten, elastischen Material, beispielsweise aus einem Elastomer, und ist in sich geschlossen, abgesehen von den bereits genannten Durchtrittsausnehmungen.

Ferner ist die Manschette 26 bevorzugt teilbar. Hierzu ist eine Manschettennaht 42 vorgesehen, die sich in der Darstellung gemäß Fig. 1 diagonal erstreckt und im Grunde eine Trennung zwischen dem Manschettenflansch 28 und dem Manschettenflansch 30 für Antriebsspindel 14 bzw. Tischantrieb 16 ermöglicht.

Für den Wechsel des Werkstücks 22 bzw. des Fräsers 20 lässt sich die Manschette 26 an der Manschettennaht 42 teilen und nach dem erfolgten Wechseln wieder sicher feuchtigkeitsdicht verschließen.

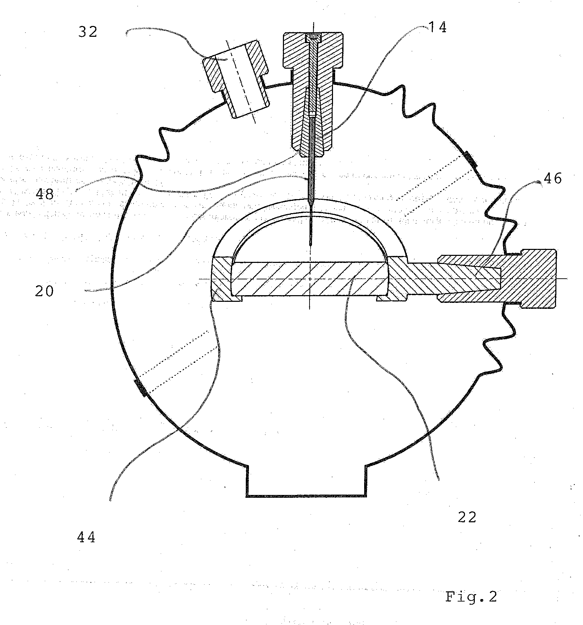

Die Ausführungsform gemäß Fig. 1 ist aus Fig. 2 in Schnittansicht ersichtlich. Über die bereits vorgenommenen Erläuterungen hinausgehend ist dieser Figur zu entnehmen, in welcher Weise das Werkstück 22 in dem Werkstückhalter 44 in an sich bekannter Weise gelagert ist. Der Tischantrieb weist in an sich bekannter Weise einen Haltekonus 46 auf; ebenso weist die Antriebsspindel 14 einen Haltekonus 48 für den Fräser 20 auf.

Die Zufuhr von Fluiden durch die Düse 32 ist nicht auf Kühlschmierstoff beschränkt. Es lässt sich auch ohne Weiteres Luft, beispielsweise deionisierte Luft, zuführen, wenn dies vom Material her geboten ist.

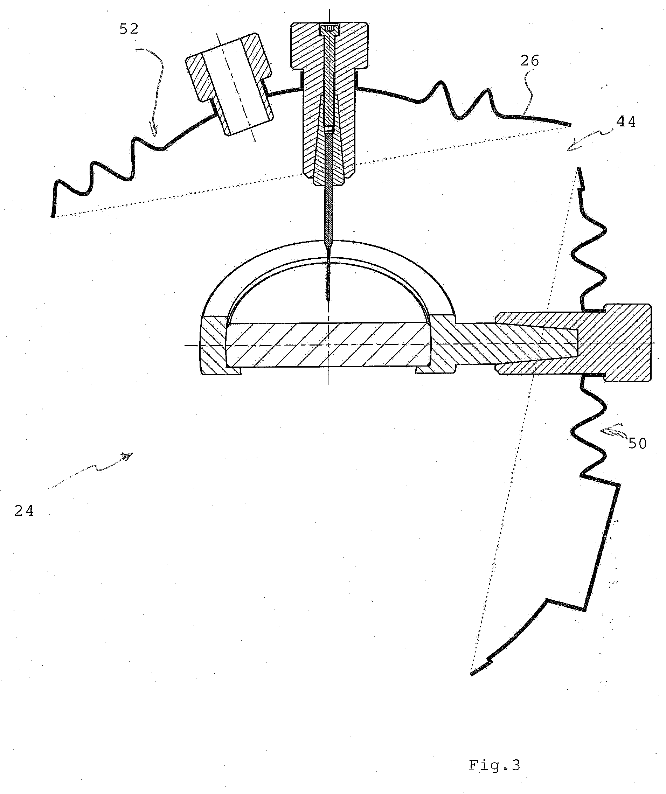

Aus Fig. 3 ist ersichtlich, wie die Teilung der Manschette 26 an der Manschettennaht 42 vorgenommen werden kann. Durch Lösen des Nahtverschlusses ist der Bearbeitungsbereich 24 freigegeben, und es ist ohne Weiteres der erwünschte Tausch von Fräser bzw. Werkstück möglich.

Der feuchtigkeitsdichte Verschluss der Naht 44 kann beispielsweise durch Permanentmagnete erfolgen, die auf an der anderen Nahtseite vorgesehene ferromagnetische Elemente wirken und in das Elastomer der Manschette eingearbeitet sind.

Es versteht sich, dass die beiden Manschetten-Halbschalen 50 und 52 aber auch in beliebiger anderer Weise aneinander gelagert sein können, wobei eine flüssigkeitsdichte Verbindung erforderlich ist.

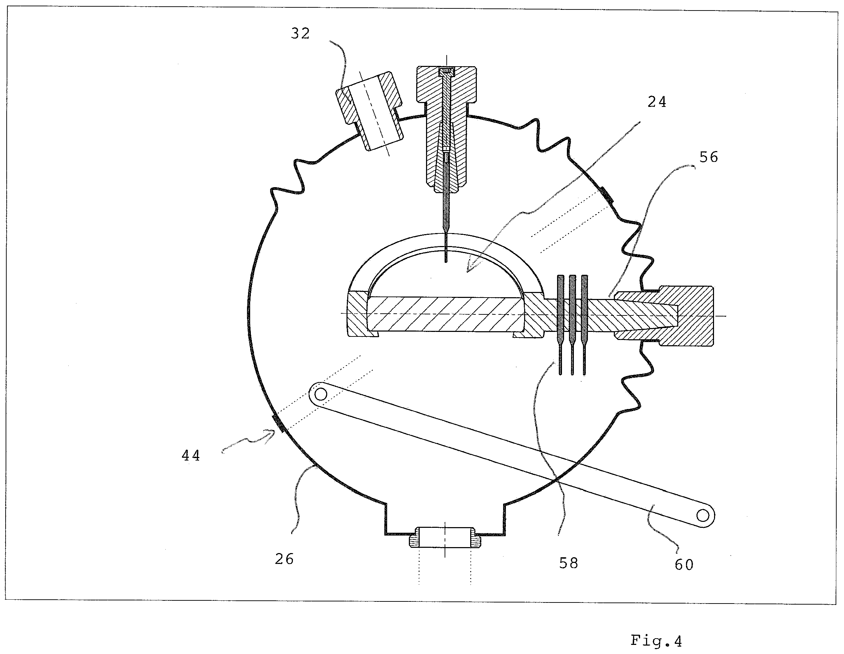

Eine weiter modifizierte Ausgestaltung ist aus Fig. 4 ersichtlich. Dort ist am Werkstücktisch 56 eine Fräserbank 58 innerhalb der Manschette 26 angeordnet. Dies ermöglicht einen Fräserwechsel, ohne dass die Manschette 26 geöffnet werden muss.

Ferner ist schematisch ein Öffnungsmechanismus 60 für die Manschettennaht 44 dargestellt; tatsächlich kann dieser beispielsweise über eine Parallelogrammführung realisiert sein.

Über die Düse 32 lässt sich abgesehen von Luft, die über einen lonisator deionisiert ist, und dem bereits erwähnten Kühlschmierstoff auch eine Kamera realisieren, die den Bearbeitungsbereich 24 sichtbar macht. Dies ermöglicht es, auch bei einer schwarz eingefärbten und aus Gummi bestehenden Manschette 26 den Fräsfortschritt im Auge zu behalten.

In einer weiteren bevorzugten Ausgestaltung ist es vorgesehen, die Manschette aus einem transparenten, aber dennoch flexiblen Kunststoff auszugestalten. Dies ermöglicht die Inaugenscheinnahme des Werkraums und gegebenenfalls des Arbeitsfortschritts.

Auch wenn die Erfindung hier vorliegend in Verbindung mit einer Dentalfräsmaschine beschrieben ist, versteht es sich, dass eine beliebige andere Bearbeitungsmaschine ebenfalls sinngemäß einsetzbar ist, solange eine abrasive bzw. subtraktive Werkstückbearbeitung vorgenommen wird.

Neben Fräsern gehören hierzu Bohrer.

## Patentansprüche

1. Dentalfräsmaschine (10), mit einer Werkzeugspindel (14) mit einem wechselbaren Werkzeug (20) in Form eines Fräsers, das in mindestens einer Raumachse verstellbar ist, wobei die Verstellbarkeit eine translatorische und/oder rotatorische Verstellbarkeit umfasst, und mit einer in einer weiteren Raumachse verstellbaren Werkstück-Haltevorrichtung (18), und wobei die Dentalfräsmaschine (10) von Normalbetrieb auf Kapselbetrieb umrüstbar ausgestaltet ist,
- wobei die Dentalfräsmaschine bei der Umrüstung eine Kapsel mit einer im Wesentlichen einen allseitig geschlossenen Hohlraum bildenden komplett feuchtigkeitsdichte Manschette (26) aufweist, die nach der Art eines Gummibalgs einen Arbeitsbereich der Dentalfräsmaschiene feuchtigkeitsdicht umgibt, ausgerüstet ist,
- die Manschette (26) zwei Anschlüsse aufweist und aus einem elastischen Material besteht und dass die Anschlüsse relativ zueinander bewegbar sind, ohne dass der Hohlraum undicht würde, und
- wobei die Manschette im Bereich des Anschlusses der Manschette (26) an der Werkzeugspindel ein Spülanschluss für den Nassbetrieb der Dentalfräsmaschine (10) aufweist.

2. Dentalfräsmaschine nach Anspruch 1, **dadurch gekennzeichnet, dass** die Manschette (26) einen Maschinenanschlussflansch und einen Trägeranschlussflansch aufweist, die je an der Fräsmaschine im Bereich des Lagers der Werkzeugspindel bzw. an dem Werkstückträger im Bereich dessen Führung angebracht sind und bei Bewegung der Spindelführung einerseits und der Werkstückträgerlagerung andererseits von diesen je mitgeführt werden.

3. Dentalfräsmaschine nach einem der vorhergehenden Ansprüche, **dadurch gekennzeichnet, dass** die Manschette (26) eine Teilungsnaht aufweist, die sich zwischen ihren Anschlussflanschen erstreckt und an welcher die Manschette (26) einseitig öffenbar ist.

4. Dentalfräsmaschine nach einem der vorhergehenden Ansprüche, **dadurch gekennzeichnet, dass** die Anschlüsse der Manschette (26) je einen Flansch der Werkzeugspindel und der Werkstück-Haltevorrichtung umgreifen und dort lösbar unter Vorspannung gehalten sind und gegen diese je abdichten.

5. Dentalfräsmaschine nach einem der vorhergehenden Ansprüche, **dadurch gekennzeichnet, dass** die Manschette (26) aus einem elastisch dehnbaren Werkstoff hergestellt ist und im Bereich ihres Manschettenbauchs (40) dergestalt verformbar ist, dass das Innere nach außen stülpbar ist.

6. Dentalfräsmaschine nach einem der vorhergehenden Ansprüche, **dadurch gekennzeichnet, dass** die Manschetten-Teilungsnaht durch ineinander eingreifende Profile der Manschette (26) gebildet ist, die auch einen Spanaufnahmeraum aufweisen.

7. Dentalfräsmaschine nach einem der vorhergehenden Ansprüche, **dadurch gekennzeichnet, dass** die Manschette (26) mit ihrem Manschettenbauch (40) so bemessen ist, dass sie die Bewegung der Werkzeugspindel relativ zur Werkstück-Haltevorrichtung in allen Extrempositionen der Achsen mitmacht, ohne dass die Manschette (26) zerstört würde oder die Manschettennaht (42) aufplatzen würde.

8. Dentalfräsmaschine nach einem der vorhergehenden Ansprüche, **dadurch gekennzeichnet, dass** die Manschette (26) ausschließlich an der Werkzeugspindel und der Werkstück-Haltevorrichtung befestigt ist und von diesen insbesondere je lösbar ist.

9. Dentalfräsmaschine nach Anspruch 8, **dadurch gekennzeichnet, dass** der Anschluss je über einen Kniehebelverschluss gewährleistet ist.

10. Dentalfräsmaschine nach einem der vorhergehenden Ansprüche, **dadurch gekennzeichnet, dass** die Manschette (26) aus zwei Halbschalen (50/52) aufgebaut ist, die symmetrisch zueinander ausgebildet sind.

11. Dentalfräsmaschine nach einem der vorhergehenden Ansprüche, **dadurch gekennzeichnet, dass** am Manschettenbauch (40) ein Auslass angebracht ist.

12. Dentalfräsmaschine nach einem der vorhergehenden Ansprüche, **dadurch gekennzeichnet, dass** an der tiefsten Stelle des Manschettenbauchs (40) eine Saugdüse angebracht ist, die unter Unterdruck steht.

13. Dentalfräsmaschine nach einem der vorhergehenden Ansprüche, **dadurch gekennzeichnet, dass** die Manschetten-Halbschalen (50/52) unter Bildung der Manschettennaht (42) durch eine Automatikvorrichtung miteinander verbindbar und gegeneinander abdichtbar und/oder voneinander lösbar sind.

14. Dentalfräsmaschine nach einem der vorhergehenden Ansprüche, **dadurch gekennzeichnet, dass** die Manschetten-Halbschalen (50/52) unter Bildung der Manschettennaht (42) durch eine Automatikvorrichtung miteinander verbindbar und gegeneinander abdichtbar und/oder über mindestens einen Elektromagnet voneinander lösbar sind.

## Claims

1. A dental milling machine (10) comprising a tool spindle (14) with an exchangeable tool (20) in the form of a milling cutter which is adjustable in at least one spatial axis, the adjustability comprising translational and/or rotational adjustability, and a workpiece holding device (18) which is adjustable in another spatial axis, and the dental milling machine (10) being designed such that it is convertible from normal operation to capsule operation, wherein
the dental milling machine comprises a capsule equipped with a completely moisture-proof collar (26) which, while being converted, forms a cavity which is completely closed to all sides and which surrounds a working area of the dental milling machine In a moisture-proof manner in the manner of a rubber bellows,
the collar (26) comprises two terminals and is made of an elastic material, and that the terminals are displaceable in relation to each other without the cavity becoming leaky, and the collar comprising a purge terminal for wet operation of the dental milling machine (10) In the region where the collar (26) is connected to the tool spindle.

2. The dental milling machine according to claim 1, **characterized in that** the collar (26) comprises a machinery-connecting flange and a support-connecting flange which each are attached to the milling machine in the region of the bearing of the tool spindle or to the workpiece support in the region of the guide thereof, respectively, and are each entrained during movement of the spindle guide on the one hand and the workpiece support bearing on the other hand.

3. The dental milling machine according to one of the preceding claims, **characterized in that** the collar (26) comprises a partioning seam which extends between connecting flanges thereof and at which seam the collar (26) can be opened unilaterally.

4. The dental milling machine according to one of the preceding claims, **characterized in that** the terminals of the collar (26) each engage around each of a flange of the tool spindle and of the workpiece holding device and are releasably held thereto while being biased and sealed against them.

5. The dental milling machine according to one of the preceding claims, **characterized in that** the collar (26) is made of an elastically extensible material and Is deformable in the region of its collar belly (40) such that the interior is able to be reversed outwards.

6. The dental milling machine according to one of the preceding claims, **characterized in that** the collar partioning seam is formed by interengaging profiles of the collar (26) which also have a span-receiving cavity.

7. The dental milling machine according to one of the preceding claims, **characterized in that** the collar (26), with its collar belly (40), is dimensioned such that it follows the movement of the tool spindle In relation to the workpiece holding device in all extreme positions of the axes without the collar (26) being destroyed or the collar seam (42) bursting.

8. The dental milling machine according to one of the preceding claims, **characterized in that** the collar (26) is fastened exclusively to the tool spindle and the workpiece holding device and especially is detachable from each one of them.

9. The dental milling machine according to claim 8, **characterized in that** each terminal is individually realized by a knee lever lock.

10. The dental milling machine according to one of the preceding claims, **characterized in that** the collar (26) is made of two half shells (50/52) which are configured symmetrically with respect to each other.

11. The dental milling machine according to one of the preceding claims, **characterized in that** an outlet is attached to the collar belly (40).

12. The dental milling machine according to one of the preceding claims, **characterized in that** a suction nozzle which Is under vacuum is mounted at the lowermost point of the collar belly (40).

13. The dental milling machine according to one of the preceding claims, **characterized in that** the collar half-shells (50/52), forming the collar seam (42), are connectable to each other by an automated device and are sealable against each other and/or releasable from each other.

14. The dental milling machine according to one of the preceding claims, **characterized in that** the collar half-shells (50/52), forming the collar seam (42), are connectable to each other by an automated device and are sealable from each other and/or releasable from each other via at least one electromagnet.

## Revendications

1. Machine de fraisage dentaire (10), avec une broche d'outil avec un outil remplaçable (20) sous la forme d'une fraise réglable dans au moins un axe spatial, où le réglage comprend un réglage en translation et/ou en rotation, et avec un dispositif porte-pièce (18) réglable dans un autre axe spatial, et où la machine de fraisage dentaire (10) est configurée de telle manière à pouvoir être convertie entre un fonctionnement normal et un fonctionnement avec capsules,
- où lors de la conversion la machine de fraisage dentaire présente une capsule avec une manchette (26) complètement étanche à l'humidité, formant une cavité essentiellement fermée de tous les côtés, qui entoure de manière étanche à l'humidité à la manière d'un soufflet en caoutchouc une zone de travail de la machine de fraisage dentaire,
- la manchette (26) présente deux raccords et est constituée d'un matériau élastique et les raccords peuvent être déplacés l'un par rapport à l'autre sans provoquer de fuite à partir du le creux, et où la manchette présente un raccordement de purge sur la broche d'outil dans la zone de raccordement de la manchette (26) pour le fonctionnement à l'état humide de la machine de fraisage dentaire (10).

2. Machine de fraisage dentaire selon la revendication 1, **caractérisée en ce que** la manchette (26) présente une bride de raccordement à la machine et une bride de raccordement au support, qui sont respectivement attachées à la machine à fraiser dans la zone du roulement de la broche d'outil ou sur le porte-pièce dans la zone de son guide et lors du déplacement du guide de la broche d'une part et du roulement du porte-pièce d'autre part sont transportées respectivement par ceux-ci.

3. Machine de fraisage dentaire selon l'une des revendications précédentes, **caractérisée en ce que** la manchette (26) présente une couture de séparation qui s 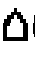 étend entre ses brides de raccordement et sur laquelle la manchette (26) peut être ouverte sur un côté.

4. Machine de fraisage dentaire selon l'une des revendications précédentes, **caractérisée en ce que** les raccords de la manchette (26) serrent respectivement une bride de la broche d'outil et du dispositif porte-pièce et y sont maintenus de manière amovible sous précontrainte et scellent respectivement contre celles-ci.

5. Machine de fraisage dentaire selon l'une des revendications précédentes, **caractérisée en ce que** la manchette (26) est constituée d'un matériau élastique extensible et dans la zone de son ventre de manchette (40) est déformable de telle manière que l'intérieur peut être retourné vers l'extérieur.

6. Machine de fraisage dentaire selon l'une des revendications précédentes, **caractérisée en ce que** la couture de séparation de la manchette est formée par des profils de la manchette (26) s'engrenant les uns dans les autres, qui présentent également un espace de réception des copeaux.

7. Machine de fraisage dentaire selon l'une des revendications précédentes, **caractérisée en ce que** la manchette (26) avec son ventre de manchette (40) est dimensionnée de telle sorte qu'elle suit le déplacement de la broche d'outil par rapport au dispositif de fixation de pièce dans toutes les positions extrêmes des axes, sans détruire la manchette (26) ou faire éclater la couture de la manchette (42).

8. Machine de fraisage dentaire selon l'une des revendications précédentes, **caractérisée en ce que** la manchette (26) est exclusivement attachée à la broche d'outil- et le dispositif porte-pièce et respectivement en particulier de manière amovible,

9. Machine de fraisage dentaire selon la revendication 8, **caractérisée en ce que** la connexion est garantie respectivement par une fixation de levier de genou.

10. Machiné de fraisage dentaire selon l'une des revendications précédentes, **caractérisée en ce que** la manchette (26) est composée de deux demi-coquilles (50/52), qui sont formées symétriquement l'une par rapport à l'autre.

11. Machine de fraisage dentaire selon l'une des revendications précédentes, **caractérisée en ce qu'**une sortie est attachée au ventre de la manchette (40).

12. Machine de fraisage dentaire selon l'une des revendications précédentes, **caractérisée en ce qu'**au point le plus profond du ventre de la manchette (40) une buse d'aspiration est attachée, qui est sous vide.

13. Machine de fraisage dentaire selon l'une des revendications précédentes, **caractérisée en ce que** les demi-coquilles (50/52) de la manchette avec la formation de la couture de manchette (42) par un dispositif automatique peuvent être reliées entre elles et peuvent être étanche l'une contre l'autre et/ou peuvent être détachées l'une de l'autre.

14. Machine de fraisage dentaire selon l'une des revendications précédentes, **caractérisée en ce qu'**avec la formation de la couture de manchette (42) les demi-coquilles (50/52) de la manchette peuvent être reliées entre elles par un dispositif automatique et peuvent être étanche l'une contre l'autre et/ou peuvent être détachées l'une de l'autre par au moins un électroaimant.
